## Europäisches Patentamt
## European Patent Office
## Office européen des brevets

(19)

(11) Veröffentlichungsnummer: **0 068 397**
**B1**

(12)

# EUROPÄISCHE PATENTSCHRIFT

(45) Veröffentlichungstag der Patentschrift:
06.02.85

(21) Anmeldenummer: 82105439.2

(22) Anmeldetag: 22.06.82

(51) Int. Cl.⁴: **B 23 P 13/04** // F42B13/16

(54) **Verfahren zur Herstellung eines Rohlings für einen Treibkäfig.**

(30) Priorität: **26.06.81 DE 3125129**

(43) Veröffentlichungstag der Anmeldung:
**05.01.83 Patentblatt 83/1**

(45) Bekanntmachung des Hinweises auf die Patenterteilung:
**06.02.85 Patentblatt 85/6**

(84) Benannte Vertragsstaaten:
**BE CH DE FR GB IT LI NL SE**

(56) Entgegenhaltungen:
**EP - A - 0 022 688
AU - A - 448 142
DE - C - 693 451
FR - A - 324 239
US - A - 2 183 502
US - A - 2 933 799
US - A - 3 430 570
US - A - 3 551 972**

(73) Patentinhaber: **Rheinmetall GmbH,
Ulmenstrasse 125 Postfach 6609, D-4000 Düsseldorf
(DE)**

(72) Erfinder: **Langenohl, Rolf, Schirich 61,
D-4060 Viersen 11 (DE)**
Erfinder: **Mestekemper, Heinz, Am Ringhofen 9,
D-4030 Ratingen (DE)**

(74) Vertreter: **Behrens, Ralf Holger, Dipl.-Phys.,
Ulmenstrasse 125, D-4000 Düsseldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren nach dem Oberbegriff des Anspruchs 1.

Aus der US-A Nr. 3430570 ist für ein flügelstabilisiertes unterkalibriges Fluggeschoss ein Treibkäfig bekannt mit einem vorderseitigen kreiszylindrischen Teil, an das sich rückseitig ein kreiskegeliges Teil anschliesst. Letzteres weist radiale Schlitze auf, die sich von einer zentralaxialen Bohrung bis in die Nähe der Kegelmantelfläche erstrecken. Unter der Wirkung des Treibgasdrucks sollen die Schlitze zusammengepresst werden und eine ausreichende Haftreibung zwischen dem Treibkäfigmaterial und dem unterkalibrigen Fluggeschoss gewährleisten, so dass sich miteinander korrespondierende Unebenheiten am Geschossumfang und in der Bohrung des Treibkäfigs vermeiden lassen. Die Schlitze können zum Segmentieren zwecks Ablösens des Treibkäfigs vom Fluggeschoss ausgebildet sein.

Diese bekannte Anordnung erfordert eine wenigstens elastische Verformung des Treibkäfigwerkstoffs; reproduzierbare Ergebnisse sind nachteiligerweise kaum zu erwarten.

Aus der AU-A Nr. 448142 ist ein flügelstabilisiertes Geschoss mit einem abwerfbaren Treibkäfig bekannt. Der Treibkäfig besteht aus einer vorderseitigen Zuführhaube aus Kunststoff, welche das unterkalibrige Flussgeschoss vorder- und umfangsseitig umschliesst. Der eigentliche Treibkäfig ist hier als ein im wesentlichen napfförmiges metallisches Element ausgebildet, welches rückseitig den Treibgasdruck bei der Schussentwicklung aufnimmt und vorderseitig das Fluggeschoss trägt und mit der Zuführhaube verbunden ist. Die Zuführhaube weist von aussen eingebrachte und als Wandstärkenschwächungen ausgebildete Sollbruchstellen auf. Diese sollen nach dem Verlassen des Rohres unter der Drallwirkung betätigt werden und das Fluggeschoss freigeben. Auch der vorerwähnte Treibkäfig — besser: Treibboden — trennt sich nach dem Verlassen des Rohres von dem Fluggeschoss.

Diese bekannte Anordnung ist ausschliesslich für drallstabilisierte Fluggeschosse geeignet.

Die FR-A Nr. 324239 betrifft Verbesserungen in der Herstellung von Barren, Metallspindeln, Schmiedestücken und aussteifenden Verstärkungselementen. Hier werden einem jeweiligen kreiszylindrischen oder rohrförmigen Gussstück vor dessen Weiterverarbeitung, beispielsweise durch Reduzierwalzen oder Schmieden, radial Partien entnommen, um hierdurch das Weiterverarbeiten zum Halbzeug zu vereinfachen und beim Fertigzeug vorgebbare Eigenschaften zu erzielen. Zum Herstellen von Rohlingen für Treibkäfige der hier zur Rede stehenden Art sind aus der vorgenannten Druckschrift keine Hinweise entnehmbar.

Der Erfindung liegt die Aufgabe zugrunde, ein Verfahren der eingangs genannten Gattung bereitzustellen, durch welches das Herstellen von Treibkäfigen der beschriebenen Art unter Beibehaltung des erforderlichen Qualitätsstandards wesentlich vereinfacht wird.

Gelöst wird diese Aufgabe durch die im Kennzeichen des Anspruchs 1 angegebenen Merkmale der Erfindung, welche nachstehend anhand zweier in der Zeichnung dargestellter Ausführungsbeispiele näher erläutert wird.

Es zeigt, jeweils in einem Schnitt quer zur Längsachse:

Fig. 1 ein erstes Formhalbzeug einer ersten Stufe,

Fig. 2 ein mit demjenigen nach Fig. 1 korrespondierendes Formhalbzeug einer zweiten Stufe,

Fig. 3 ein zweites Formhalbzeug einer ersten Stufe,

Fig. 4 ein mit demjenigen nach Fig. 3 korrespondierendes Formhalbzeug einer zweiten Stufe, und

Fig. 5 einen Treibkäfig im seitlichen Aufriss, in vergleichsweise vergrösserter Darstellung.

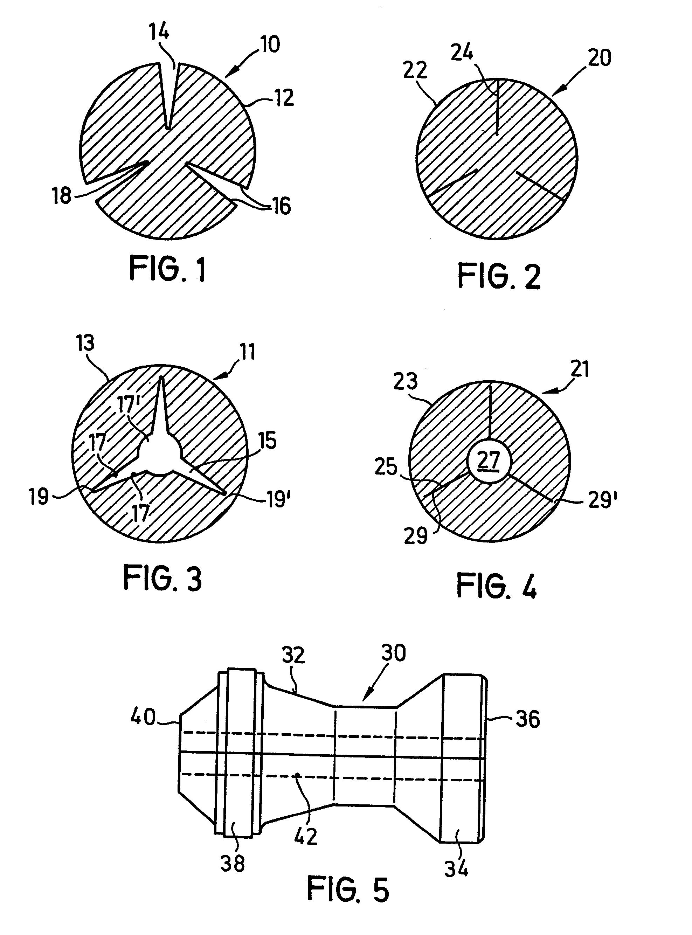

Fig. 1 zeigt den Querschnitt eines Pressstrangs als erstes Formhalbzeug 10 einer ersten Stufe mit einer Umfangsfläche 12 und drei Einschnitten 14 mit einem im wesentlichen keilförmigen Querschnitt, welcher von Einschnittsflächen 16 begrenzt wird. Letztere vereinigen sich in einem Einschnittsgrund 18 in der Nachbarschaft des Zentrums. Zum Erzielen eines Formhalbzeugs 20 einer zweiten Stufe (s. Fig. 2) wird das Formhalbzeug 10, vorzugsweise durch Walzen, querschnittsreduziert, wobei die Einschnitte 14 zu Trennfugen 24 geschlossen werden und sich eine im wesentlichen geschlossene Umfangsfläche 22 ergibt. Zum Vermeiden von Kaltverschweissungen der Einschnittsflächen 16 miteinander können diese vor dem Reduzierwalzen mit einem Trennmittel versehen werden. Hierzu bietet sich beispielsweise Graphit an. Bei grossem Durchmesser des Formhalbzeugs 20 für einen entsprechenden Rohling kann das Ablängen zum Erhalten eines Rohlings vor einer Weiterbearbeitung vorteilhaft sein. Bei kleinem Durchmesser kann es vorteilhaft sein, die Bearbeitung zum Erzielen einer Kontur 32 (s. Fig. 5) vor dem Ablängen auszuführen.

Fig. 3 zeigt den Querschnitt eines Pressstrangs als zweites Formhalbzeug 11 einer ersten Stufe. Hierbei erstrecken sich die Einschnitte 15 von einem zentralen Hohlraum 17' aus entlang Einschnittsflächen 17 bis zu einem Einschnittsgrund 19, welcher nur durch einen schmalen Rand 19' von der Umfangsfläche 13 getrennt ist. Zum Erzielen eines Formhalbzeugs 21 einer zweiten Stufe (s. Fig. 4) erfolgt auch hier wieder ein Schliessen der Einschnitte 17 zu Trennfugen 25, deren aussere Enden 29 um eine Strecke 29' von der unversehrten Umfangsfläche 23 entfernt sind. Bei der Weiterverarbeitung wird verfahren, wie es im Zusammenhang mit dem Beispiel nach Fig. 2 beschrieben wurde. Dabei ergibt sich jedoch der Vorteil, dass das Einbringen einer zentralen Bohrung 42 (s. Fig. 5) wesentlich vereinfacht ist und zu einem geringeren Zerspanungsvolumen führt. Ein weiterer Vorteil besteht darin, dass zum Einbringen der Bohrung 42 ein umfangsseitiges Bandagieren überflüssig ist, da die Trennfugen 25 nicht die Umfangsfläche 23 unterbrechen.

Die durch die Erfindung zu erzielende wesentliche Vereinfachung ist offensichtlich. Dabei lässt sich vorteilhafterweise das Bearbeitungsübermass des Rohlings dem fertigen Treibkäfig jeweiligen Anforderungen der Fertigung auch zum Erzielen einer weitestgehenden Werkstoffersparnis sehr eng anpassen. Beim Ausführungsbeispiel nach den Fig. 3 und 4 wird bevorzugterweise ein vorher gelochter Ausgangsknüppel oder -block in den Aufnehmer einer betreffenden Presse eingesetzt.

Bezugszeichenliste

| 10, 11 | Formhalbzeug 1. Stufe |
|--------|----------------------|
| 12, 13 | Umfangsfläche |
| 14, 15 | Einschnitt |
| 16, 17 | Einschnittsfläche |
| 17′ | Hohlraum |
| 18, 19 | Einschnittsgrund |
| 19′ | Randstreifen |
| 20, 21 | Formhalbzeug 2. Stufe |
| 22, 23 | Umfangsfläche |
| 24, 25 | Trennfuge |
| 27 | Hohlraum |
| 29 | Trennfugenende |
| 29′ | Strecke |
| 30 | Treibkäfig |
| 32 | Kontur |
| 34 | Vorderflansch |
| 36 | Vorderkante |
| 38 | Hinterflansch |
| 40 | Heckkante |

## Patentansprüche

1. Verfahren zum Herstellen eines Rohlinges, vorzugsweise aus einem metallischen Werkstoff, für einen rotationssymmetrischen Treibkäfig zur umfangsseitigen Anordnung an einem unterkalibrigen Fluggeschoss in einem Bereich, zwischen dessen Spitzen- und Heckbereich und aus wenigstens zwei Segmenten, welche sich entlang radialer Trennfugen über die gesamte Treibkäfiglänge erstrecken, gekennzeichnet durch folgende Verfahrensschritte:

a) aus einem Ausgangsknüppel wird durch spanlose Formgebung über seine gesamte Länge auf einen im wesentlichen kreisförmigen Querschnitt und durch Einbringen radialer Einschnitte im wesentlichen keilförmigen Querschnitts, deren Anzahl derjenigen der Trennfugen des Treibkäfigs entspricht, ein Formhalbzeug einer ersten Stufe erzeugt,

b) die Querschnittsfläche des Formhalbzeuges der ersten Stufe wird durch spanlose Formgebung unter Schliessen der Einschnitte, wobei deren einander benachbarte Flächenbereiche nicht miteinander verschweissen, zum Erhalt eines Formhalbzeugs einer zweiten Stufe auf ein vorgebbares Übermass reduziert, und

c) das Formhalbzeug der zweiten Stufe wird zum Erzeugen eines jeweiligen Rohlings quer zur Längsachse auf vorgebbare Längen unterteilt.

2. Verfahren nach Anspruch 1, dadurch gekennzeichnet, dass das Formhalbzeug der ersten Stufe durch Strangpressen und das Formhalbzeug der zweiten Stufe aus dem Formhalbzeug der ersten Stufe durch Reduzierwalzen erzeugt wird.

3. Verfahren nach einem der Ansprüche 1 oder 2, dadurch gekennzeichnet, dass auf die Einschnittsflächen vor dem Schliessen ein Trennmittel, beispielsweise Graphit, aufgebracht wird.

## Revendications

1. Procédé de production d'une ébauche, de préférence en matière métallique, pour une cage de propulsion présentant une symétrie de révolution, devant être disposée périphériquement sur un projectile sous-calibré dans une zone comprise entre sa zone de tête et sa zone arrière et comprenant au moins deux segments qui s'étendent suivant des fentes de séparation radiales sur toute la longueur de la cage de propulsion, caractérisé en ce qu'il comprend les étapes suivantes:

a) à partir d'une billette de départ, on produit par formage sans enlèvement de copeaux, sur toute sa longueur, sur une section sensiblement rectangulaire, et en pratiquant des encoches radiales de section droite sensiblement cunéiforme dont le nombre est égal à celui des fentes de séparation de la cage de propulsion, un demi-produit à un premier stade;

b) on réduit la surface de la section droite du demi-produit du premier stade, par formage sans enlèvemenr de copeaux, en refermant les entailles, sans souder entre elles les zones superficielles voisines, pour obtenir un demi-produit à un second stade, à une surépaisseur d'usinage prédéterminable, et

c) pour produire chaque ébauche, on tronçonne le demi-produit au second stade, perpendiculairement à son axe longitudinal, à des longueurs prédéterminées.

2. Procédé selon la revendication 1, caractérisé en ce qu'on fabrique le demi-produit au premier stade par extrusion et le demi-produit au second stade par laminage réducteur, à partir du demi-produit au premier stade.

3. Procédé selon l'une des revendications 1 ou 2, caractérisé en ce qu'on applique aux surfaces d'encoche un agent séparateur, par exemple du graphite, avant la fermeture.

## Claims

1. Process for production of a blank, preferably from a metallic material, for a rotationally symmetrical sabot to be mounted around the periphery of a sub-calibre projectile in a zone between the nose and the tail, the sabot having at least two segments with radial separating planes extending the entire length of the sabot, process characterized by the following steps:

(a) a semi-finished first stage profile is produced from a starting billet, by a non-cutting shaping process over the entire length to produce a substantially circular cross-section with the provision of radical cuts of generally wedge-shaped cross-section corresponding in number to the number of separating planes in the sabot;

(b) the cross-section surface of the semi-finished profile of the first stage is reduced to a preselected oversize by a non-cutting shaping process during which the cuts are closed, wherein the mutually adjacent surface zones do not become welded together, so as to produce a semi-finished profile forming a second stage, and

(c) the semi-finished profile of the second stage is subdivided transverse to the longitudinal axis into preselected lengths to produce a respective blank.

2. Process in accordance with Claim 1, characterized in that the semi-finished profile of the first stage is produced by an extrusion process and the semi-finished profile of the second stage is produced by means of reducing rolls.

3. Process in accordance with one of Claims 1 or 2, characterized by a parting compound such as graphite being applied to the surfaces of the cuts before the closing operation.

FIG. 1

FIG. 2

FIG. 3

FIG. 4

FIG. 5